# EUROPÄISCHE PATENTSCHRIFT

(11) **EP 0 886 081 B1**
(45) Veröffentlichungstag und Bekanntmachung des Hinweises auf die Patenterteilung: **21.05.2003**
(21) Anmeldenummer: 98111179.2
(22) Anmeldetag: 18.06.1998
(51) Int. Cl.: F16F 15/26

(54) **Lagerelement für eine schwingungsbehaftete Maschine, insbesondere eine Verbrennungskraftmaschine**
Supporting element for a vibrating machine, especially for an internal combustion engine
Elément de support pour une machine vibrante, notamment pour un moteur à combustion interne

(30) Priorität: 19.06.1997 DE 19725919
(43) Veröffentlichungstag der Anmeldung: 23.12.1998
(73) Patentinhaber: ContiTech Vibration Control GmbH, 30165 Hannover (DE)
(72) Erfinder: Günther, Eberhard, Dr., 30989 Gehrden (DE)

(56) Entgegenhaltungen:
- EP-A- 0 457 466
- WO-A-95/02133
- US-A- 5 213 184
- US-A- 5 347 884
- PATENT ABSTRACTS OF JAPAN vol. 007, no. 079 (M-204), 31. März 1983 & JP 58 004689 A (NISHISHIBA DENKI KK), 11. Januar 1983
- PATENT ABSTRACTS OF JAPAN vol. 007, no. 215 (M-244), 22. September 1983 & JP 58 109744 A (TOYOTA JIDOSHA KOGYO KK), 30. Juni 1983

## Beschreibung

Die Erfindung betrifft ein Lagerelement für eine schwingungsbehaftete Maschine, insbesondere eine Verbrennungskraftmaschine zur Befestigung an einer Stützkonstruktion, beispielsweise einer Kraftfahrzeugkarosserie.

In zahlreichen Gebieten der Technik stellt sich die Aufgabe, die Schwingungen von schwingungsbehafteten Maschinen entweder zu dämpfen oder durch Ausgleich von Massenkräften, Massenmomenten und Leistungen eliminieren. Diese dynamischen Probleme treten insbesondere bei Hubkolbenmaschinen auf, sind aber darüber hinaus bei einer Vielzahl anderer schnell laufender Maschinen gegeben. Die Hubkolbenmaschinen sind Sonderfälle der ungleichförmig übersetzenden Getriebe, die beispielsweise auch in großer Zahl und unterschiedlichen Bauformen in Verarbeitungsmaschinen vorkommen. Insbesondere bei Verbrennungskraftmaschinen herkömmlicher Bauart, d.h. bei Ausführungsformen als Hubkolbenmaschine, sind aus Komfortgründen hohe Anforderungen an den Massenausgleich und Isolation von Restschwingungen von der Karosserie, beispielsweise eines Kraftfahrzeuges, gestellt.

Insbesondere bei Verbrennungskraftmaschinen ist es bekannt, zum Ausgleich von dynamischen Kräften, die durch die Trägheit beschleunigt bewegter Massen hervorgerufen werden, rotierende Ausgleichswellen vorzusehen. Zur Beseitigung von Längs- und Querkraft erster Ordnung einer Hubkolbenmaschine rotieren dabei umlaufende Zusatzmassen mit der gleichen Winkelgeschwindigkeit wie die Kurbelwelle der Verbrennungskraftmaschine.

Zur Beseitigung der Längskraft zweiter Ordnung ist es bekannt, Ausgleichswellen mit einer Unwucht mit doppelter Kurbelwellengeschwindigkeit rotieren zu lassen. Um bei einem Ausgleich der Längskraft zweiter Ordnung nicht ungewollt Querkräfte gleicher Größenordnung zu erzeugen, ist es bekannt, zwei Ausgleichswellen mit jeweils der halben rechnerisch sich ergebenden Unwucht zur Kompensation der Längskraft erster Ordnung gegenläufig rotieren zu lassen, so daß lediglich Kräfte in Längsrichtung erzeugt werden.

Der Nachteil von in Verbrennungskraftmaschinen oder andere Maschinen integrierten, unmittelbar angetriebenen Ausgleichswellen ist es, daß ein hoher baulicher Aufwand gegeben ist und sich solche Ausgleichswellen nicht an bereits existierenden Maschinen nachrüsten lassen.

Es sind daher zahlreiche Bestrebungen bekannt, durch geeignete Auslegung von elastischen Lagerungen zwischen Maschine und Stützkonstruktion, beispielsweise zwischen Werkzeugmaschine und Fundament oder zwischen Verbrennungskraftmaschine und Karosserie Schwingungen zu dämpfen oder zu tilgen.

Aus der DE 39 02 605 A1 ist beispielsweise eine elastische Lagerung mit einem zwischen zwei Anschlußteilen angeordneten gummielastischen Federelement zur Abstützung einer schwingenden Last bekannt, bei dem elektrostriktive oder magnetostriktive Aktuatoren vorgesehen sind, um in Abhängigkeit von einem von einem Sensor gelieferten Signal die Schwingung tilgende Gegenkräfte in die Lagerung einzuleiten.

Aus der DE 34 23 698 C1 ist eine Schwingungsisoliervorrichtung, d.h. ein Lagerelement bekannt, das ein elastisches Element umfaßt, das wenigstens eine zum Teil mit einem Fluid gefüllte Fluidkammer umfaßt, wobei in der Fluidkammer Druckschwingungen erzeugt werden, deren Phase derjenigen der von der schwingungsbehafteten Last eingeleiteten Druckschwingungen entgegengesetzt ist.

Aus der EP 0 347 666 A2 ist eine schwingungsdämpfende und schwingungskompensierende Lageranordnung bekannt, bei der als schwingungskompensierendes Bauelement ein piezoelektrisch arbeitendes Bauteil verwendet wird, das als Elongator entsprechende Kräfte in Abhängigkeit von einer Steuereinheit erzeugt, um eingeleitete Schwingungskräfte zu kompensieren.

Aus der EP 0 464 598 A1 ist ein elastisches Motorlager bekannt, bei dem ein Gummikörper aus hochdämpfendem Material unterstützt wird durch ein elektrodynamisch in Schwingungen versetzbares Entkopplungssystem.

Aus der EP 0 547 469 B1 ist ein aktives elastisches Lager bekannt, das ebenfalls zur isolierenden Lagerung eines schwingungsbehafteten Aggregats, insbesondere einer Verbrennungskraftmaschine in einem Kraftfahrzeug, vorgesehen ist, wobei ein aktives Entkopplungssystem mit Tilgermasse elektrodynamisch in Schwingungen versetzbar ist.

Weiterhin ist aus der EP 0 401 463 B1 ein Gummilager mit hydraulischer Dämpfung bekannt, bei dem ein flüssigkeitsgefüllter Arbeitsraum eine auf einer Feder abgestützte Platte aus magnetisierbarem Werkstoff enthält, die in Abhängigkeit von vorgegebenen Parametern mit Hilfe eines Magnetsystems in Richtung des Arbeitsraumes hin- und herbewegbar ist, ebenfalls zur Kompensation von Schwingungen.

In der DE 34 36 822 A1 ist eine Lageranordnung, insbesondere für Kfz-Motoren, beschrieben, die einstellbare Fliehgewichte aufweist und mit der eine der Schwingungsfrequenz des Motors entsprechende, etwa quer zur Motorschwingung wirkende Drehschwingung so ausgeführt werden kann, daß eine Erhöhung der Federrate der Lageranordnung eintritt.

Schließlich sind gemäß der US 5 213 184 A zwei Paare jeweils gleichsinnig rotierender Ausgleichsmassen vorgesehen, um eine von einem Körper erzeugte Vibrationskraft zu kompensieren, und aus der US 4 610 420 A ist eine Pendelstütze nach dem Oberbefriff von Anspruch 1, mit einer elektrodynamischen Tilgungseinrichtung bekannt.

Den bekannten Lagerelementen für schwingungsbehaftete Maschinen ist der Nachteil zu eigen, daß sie kompliziert im Aufbau und schwierig zu regeln sind.

Der Erfindung liegt daher die Aufgabe zugrunde, ein Lagerelement zu schaffen, das die erwähnten Nachteile nicht aufweist.

Die Lösung der Aufgabe erfolgt durch die Merkmale des kennzeichnenden Teils von Anspruch 1.

Die vorgeschlagene Konstruktion mit vier Wellen kann unterschiedlich angetrieben werden.

Bei einer ersten erfindungsgemäßen Lösung kann vorgesehen sein, daß als Antrieb aller vier Ausgleichswellen ein einziger Elektromotor vorgesehen ist, wobei eine mechanische Verstelleinrichtung zur Einstellung der Phasendifferenz zwischen ersten und zweiten Wellenpaar dient.

Alternativ kann vorgesehen sein, daß für jedes Wellenpaar ein eigener Elektromotor vorgesehen ist, sowie ein elektrischer Phasenschieber zum Einstellen der Phasendifferenz zwischen ersten und zweiten Wellenpaar und damit der Amplitude der Kompensationskraft.

Schließlich kann vorgesehen sein, jeder Welle einen eigenen Elektromotor zuzuordnen, sowie eine elektrische Synchronisationsvorrichtung zu verwenden, um die vier Elektromotoren so anzusteuern, daß erste und zweite Welle eines jeden Wellenpaares mit gleicher Drehzahl gegenläufig rotieren, so daß ihre Querkräfte einander aufheben, und eine Phasendifferenz zwischen ersten und zweitem Wellenpaar dergestalt einstellbar ist, daß die Größe der ergebenden Kraft justiert wird.

Die Erfindung wird im folgenden anhand eines in der Zeichnung beschriebenen Ausführungsbeispieles näher erläutert. In der Zeichnung zeigen:
- Figur 1 -: eine schematische Darstellung einer erfindungsgemäßen Pendelstütze mit vier integrierten Ausgleichswellen, und
- Figur 2 -: eine schematische Darstellung der sich ergebenden Gesamtkraft F_{U}, d.h. die Resultierende der Unwuchtkräfte.

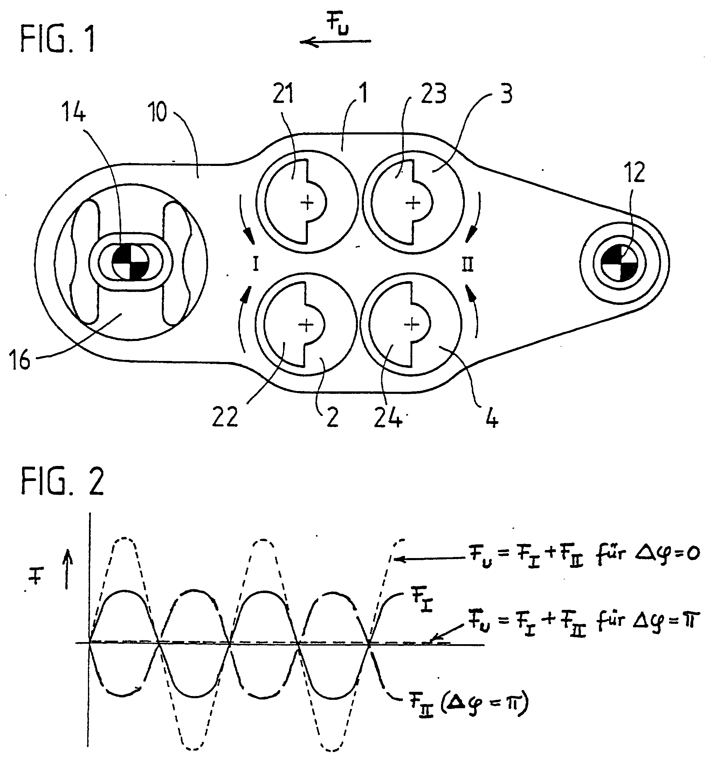

Figur 1 zeigt eine erfindungsgemäße Pendelstütze 10 in schematischer Darstellung in Draufsicht. Die Pendelstütze weist ein Lagerauge 12 zur Befestigung an der Karosserie eines Kraftfahrzeuges auf sowie ein Lagerauge 14 zur Befestigung an einer Brennkraftmaschine. Das Lagerauge 14 ist über aus einem Elastomer bestehende Federungselemente 16 federnd/dämpfend gelagert.

In die Pendelstütze 10 sind insgesamt vier Ausgleichswellen 1, 2, 3 und 4 integriert, jeweils mit Unwuchten 21, 22, 23 und 24.

Die Wellen 21 und 22 bilden ein gegenläufig drehendes Paar I, während die Wellen 23 und 24 ein zweites Paar II bilden.

Laufen die Wellen aus der in Figur 1 gezeigten Position mit gleichen Winkelgeschwindigkeiten ω um, so addieren sich die Unwuchtkräfte in Längsrichtung, d.h. in Längsrichtung der Pendelstütze, während sich die Kräfte eines jeden Wellenpaares in Querrichtung jeweils aufheben.

Figur 2 zeigt in gestrichelter Darstellung den Verlauf der resultierenden Unwuchtkraft F_{U}, die sich durch die Überlagerung der Unwuchtkräfte F_{I} und F_{II} der beiden Wellenpaare I und II ergibt.

Bei Phasengleichheit (Δϕ = o) addieren sich gleichgroße Unwuchtkräfte zu einer Resultierenden, die dem Doppelten der Einzelkräfte F_{I} bzw. F_{II} entspricht. Durch Erzeugen einer Phasendifferenz (Δϕ ≠ o) kann die Amplitude der resultierenden Unwuchtkraft, die zu Ausgleichszwecken von Schwingungen zur Verfügung steht, verringert werden, bis sich die Einzelkräfte bei einer Phasendifferenz von Δϕ = π gegenseitig kompensieren, so daß die Pendelstütze dann keine Kräfte an die Lageraugen 12 und 14 überträgt.

## Patentansprüche

1. Lagerelement für einen Kraftfahrzeug-Verbrennungsmotor, das in Form einer Pendelstütze (10) ausgebildet ist, die ein Lagerauge (14) zur Befestigung an dem Verbrennungsmotor und ein Lagerauge (12) zur Befestigung an einer Kraftfahrzeugkarosserie, aufweist, **gekennzeichnet durch** vier in die Pendelstütze (10) integrierte Wellen (1, 2, 3, 4) mit je einer umlaufenden Ausgleichsmasse (21, 22, 23, 24) und einem eigenen Antrieb, **durch** den ein erstes Paar (I) gegenläufiger Wellen (1, 2) mit Ausgleichsmassen (21, 22) gleicher Grösse und ein zweites Paar (II) gegenläufiger Wellen (3, 4) mit Ausgleichsmassen (23, 24) gleicher Grösse mit einer einstellbaren Phasendifferenz rotierbar sind.

2. Lagerelement nach Anspruch 1, **dadurch gekennzeichnet, dass** als Antrieb aller vier Wellen (1, 2, 3, 4) ein Elektromotor vorgesehen ist, mit einer mechanischen Verstelleinrichtung zur Einstellung der Phasendifferenz zwischen erstem Wellenpaar (I) und zweitem Wellenpaar (II).

3. Lagerelement nach Anspruch 1, **dadurch gekennzeichnet, dass** zum Antrieb eines jeden Wellenpaares (I, II) ein eigener Elektromotor vorgesehen ist, sowie ein elektrischer Phasenschieber zum Einstellen einer Phasendifferenz zwischen erstem Wellenpaar (I) und zweitem Wellenpaar (II).

4. Lagerelement nach Anspruch 1, **gekennzeichnet durch** einen eigenen Elektromotor für jede der vier Wellen (1, 2, 3, 4) sowie eine elektrische Synchronisationsvorrichtung zum Ansteuern der vier Elektromotore.

## Claims

1. Bearing element for an automotive vehicle internal combustion engine, which element is in the form of a link support (10) which includes a bearing boss (14) for securement to the internal combustion engine and a bearing boss (12) for securement to an automotive vehicle body, **characterised by** four shafts (1, 2, 3, 4), which are incorporated in the link support (10) and each have a rotating compensating mass (21, 22, 23, 24) and an inherent drive, by means of which a first pair (I) of oppositely-directed shafts (1, 2) is rotatable with compensating masses (21, 22) of identical size, and a second pair (II) of oppositely-directed shafts (3, 4) is rotatable with compensating masses (23, 24) of identical size with an adjustable phase difference.

2. Bearing element according to claim 1, **characterised in that** an electric motor is provided as the means for driving all four shafts (1, 2, 3, 4), said motor having a mechanical adjuster for setting the phase difference between the first pair of shafts (I) and the second pair of shafts (II).

3. Bearing element according to claim 1, **characterised in that** an inherent electric motor is provided to drive each pair of shafts (I, II), and an electrical phase shifter is provided to set a phase difference between the first pair of shafts (I) and the second pair of shafts (II).

4. Bearing element according to claim 1, **characterised by** an inherent electric motor for each of the four shafts (1, 2, 3, 4) as well as an electrical synchronisation apparatus for actuating the four electric motors.

## Revendications

1. Elément de palier pour un moteur à combustion interne d'un véhicule automobile, qui se présente sous la forme d'un support oscillant (10) qui comprend un oeil de palier (14) pour la fixation sur le moteur à combustion interne et un oeil de palier (12) pour la fixation sur une carrosserie de véhicule automobile,
**caractérisé par** quatre arbres (1, 2, 3, 4) intégrés dans le support oscillant (10), comprenant à chaque fois une masse d'équilibrage rotative (21, 22, 23, 24) et une propre commande par laquelle peuvent être en rotation une première paire (I) d'arbres opposés (1, 2) ayant des masses d'équilibrage (21, 22) de même dimension, et une seconde paire (II) d'arbres opposés (3, 4) ayant des masses d'équilibrage (23, 24) de même dimension et comportant une différence de phase réglable.

2. Elément de palier selon la revendication 1, **caractérisé en ce qu'**il prévu un moteur électrique servant de commande de la totalité des quatre arbres (1, 2, 3, 4), comprenant un dispositif de réglage mécanique servant au réglage de la différence de phase entre une première paire d'arbres (I) et une seconde paire d'arbres (II).

3. Elément de palier selon la revendication 1, **caractérisé en ce qu'**il prévu un propre moteur électrique servant de commande pour chacune des paires d'arbres (I, II), ainsi qu'un déphaseur électrique servant au réglage d'une différence de phase entre une première paire d'arbres (I) et une seconde paire d'arbres (II).

4. Elément de palier selon la revendication 1, **caractérisé par** un propre moteur électrique pour chacun des quatre arbres (1, 2, 3, 4), ainsi que par un dispositif de synchronisation électrique pour la commande des quatre moteurs électriques.
